# EUROPÄISCHE PATENTSCHRIFT

(11) **EP 2 608 037 B1**
(45) Veröffentlichungstag und Bekanntmachung des Hinweises auf die Patenterteilung: **15.08.2018**
(21) Anmeldenummer: 12197456.2
(22) Anmeldetag: 17.12.2012
(51) Int. Cl.: G06F 11/10, B60R 16/02, G06F 12/16, G06F 11/14

(54) **Verfahren zum Verwalten von Daten in einem Flash-Speicher, Fahrerassistenzeinrichtung und Kraftfahrzeug**
Method for managing data in a flash memory, driver assistance device and motor vehicle
Procédé de gestion de données dans une mémoire Flash, dispositif d'assistance au conducteur et véhicule automobile

(30) Priorität: 23.12.2011 DE 102011122344
(43) Veröffentlichungstag der Anmeldung: 26.06.2013
(73) Patentinhaber: Valeo Schalter und Sensoren GmbH, 74321 Bietigheim-Bissingen (DE)
(72) Erfinder: Dürr, Marc, 74360 Ilsfeld (DE); Werz, Martin, 74182 Obersulm (DE); Hekermans, Arnd, 70329 Stuttgart (DE); Anderschitz, Martin, 71636 Ludwigsburg (DE); Eiberger, Konrad, 72226 Simmersfeld-Ettmannsweiler (DE); Wigger, Bernd, 74321 Bietigheim-Bisssingen (DE); Ruff, Achim, 74354 Besigheim (DE)

(56) Entgegenhaltungen:
- EP-A1- 1 701 262
- EP-A2- 1 120 709
- DE-A1- 19 931 184

## Beschreibung

Die Erfindung betrifft ein Verfahren zum Verwalten von Daten in einem Flash-Speicher einer Fahrerassistenzeinrichtung eines Kraftfahrzeugs mittels einer Recheneinrichtung der Fahrerassistenzeinrichtung. Der Flash-Speicher umfasst einen ersten und einen zweiten Speichersektor, in denen die Daten abgespeichert werden. Die Daten beinhalten kritische Daten, deren Fehlen zu einem Ausfall der Fahrerassistenzeinrichtung führt, wie auch unkritische Daten. Die Erfindung betrifft außerdem eine Fahrerassistenzeinrichtung für ein Kraftfahrzeug, die zum Durchführen eines derartigen Verfahrens ausgebildet ist, wie auch ein Kraftfahrzeug mit einer solchen Fahrerassistenzeinrichtung.

Fahrerassistenzeinrichtungen für Kraftfahrzeuge sind bereits Stand der Technik. Sie dienen zum Unterstützen des Fahrers beim Führen des Kraftfahrzeugs. Beispielsweise sind so genannte Parkhilfesysteme bekannt, die den Fahrer beim Einparken bzw. Ausparken des Kraftfahrzeugs - also allgemein gesagt beim Rangieren des Kraftfahrzeugs - unterstützen. Fahrerassistenzeinrichtungen beinhalten in der Regel Sensoren, etwa Ultraschallsensoren, wie auch ein Steuergerät bzw. eine Recheneinrichtung, welche die erfassten Sensordaten verarbeitet und auswertet, etwa im Hinblick auf Entfernungen zwischen dem Kraftfahrzeug und den in seiner Umgebung befindlichen Hindernissen. Zu einer solchen Fahrerassistenzeinrichtung gehört in der Regel auch ein Datenspeicher, in welchem unterschiedlichste Daten abgespeichert werden können. Stand der Technik sind so genannten EEPROM-Speicher, welche nichtflüchtige Speicher sind. Für moderne Mikrocontroller werden jedoch häufig keine EEPROM-Speicher eingesetzt. Stattdessen werden Flash-Speicher verwendet, die auch unter der Bezeichnung "Flash-EEPROM" bekannt sind. Dabei wird die EEPROM-Funktion des Speichers mithilfe einer geeigneten Software emuliert. Die vorliegende Erfindung ist nicht auf ein bestimmtes Fahrerassistenzsystem bzw. auf eine bestimmte Anwendung beschränkt; das nachfolgend dargestellte Konzept ist unabhängig von der Applikation und kann für unterschiedlichste Anwendungen bei einer Fahrerassistenzeinrichtung im Kraftfahrzeug genutzt werden.

Sowohl die EEPROM-Speicher als auch die Flash-Speicher bieten die Möglichkeit, Daten bzw. Informationen auf Dauer zu speichern, nämlich selbst wenn sie nicht mit elektrischem Strom versorgt werden. Gegenüber den EEPROM-Speichern erlauben die neuartigen Flash-Speicher einen deutlich kürzeren Schreibzyklus von 1µs bis 1ms. Die Verwendung eines Flash-Speichers ist jedoch auch mit einer gewissen Einschränkung verbunden: Zwar kann ein derartiger Speicher byteweise adressiert werden, jedoch können die Daten lediglich in größeren Mengen gleichzeitig gelöscht werden, und zwar sektorweise. Dies bedeutet, dass in der Regel der gesamte Sektor - meistens ein Viertel, Achtel, Sechzehntel usw. der Gesamtspeicherkapazität - gelöscht werden muss. Beim Überschreiben der Daten muss somit der gesamte Sektor vollständig gelöscht werden. Bevor die Daten gelöscht werden dürfen, muss sichergestellt werden, dass keine unerwartete Unterbrechung des Systems zu einem Fehlverhalten des Systems führen kann. Deswegen müssen jederzeit alle erforderlichen Daten im nicht flüchtigen Speicher gespeichert sein. Somit müssen alle benötigten Daten von dem zu löschenden Sektor in einen anderen Sektor zuvor umkopiert werden. Erst dann kann ein Sektor gelöscht werden. Es erfolgt also ein Hin- und Herkopieren der benötigten Daten von einem Sektor in den anderen, bevor eine Löschung erfolgen kann. Man hat hier mit einem so genannten Ringspeicher zu tun, bei welchem zunächst der erste Sektor vollständig mit Daten geschrieben wird und die Daten erst dann in dem zweiten Sektor abgelegt werden, wenn der erste Sektor vollständig belegt ist.

Ist einer der Sektoren also vollständig mit Daten gefüllt, sodass keine Daten mehr in diesem Sektor abgespeichert werden können, so werden die noch benötigten Daten zu dem anderen Sektor kopiert, bevor der erste Sektor gelöscht werden kann. Dies bedingt, dass bei einem vollständig mit Daten gefüllten Speichersektor eine Defragmentierung stattfindet, da inzwischen ungültige Daten vollständig gelöscht und die gültigen bzw. benötigten Daten unter eine andere Speicheradresse im neuen Speichersektor geschrieben werden. Nun hat sich herausgestellt, dass es beim Kopieren der Daten in den anderen Speichersektor bei ungünstigen Systemzuständen zu einem Überlauf des Flash-Speichers (Overflow) kommen kann. Ein solcher Überlauf des Flash-Speichers kann beispielsweise dann auftreten, wenn der Vorgang des Kopierens eines Datenblocks in den anderen Speichersektor unterbrochen wird, etwa aufgrund des Einbruchs der elektrischen Spannung oder aber aufgrund eines externen Resets. Üblicherweise werden Daten in kleinen zusammengehörigen Datensätzen abgespeichert. Diese sind erst dann gültig, wenn der gesamte Datensatz geschrieben wurde. Eine Unterbrechung des Schreibvorgangs vor Abschluss führt zu so genannten ungültigen Datensätzen, die weiterhin ihren Speicherplatz benötigen. Wenn öfters diese Schreibvorgänge unterbrochen werden, führt dies weiterhin dazu, dass der Speicher gefüllt wird. So kommt es beispielsweise dann zu einem Überlauf des Flash-Speichers, wenn der Kopiervorgang des Datenblocks (beispielsweise 1 kB) vierzehn Mal nacheinander durch einen zyklischen Reset in einem zeitlichen Abstand von etwa 300 ms unterbrochen wird, wobei an dieser Stelle angemerkt sei, dass die Anzahl der auftretenden Resets und der zeitliche Abstand dazwischen von Systemvariablen abhängen, wie beispielsweise der Sektorgröße, Größe des Datenblocks Hochlaufzeit des Steuergeräts und dergleichen. Bei einem solchen Überlauf des Flash-Speichers werden beide Speichersektoren vollständig mit Daten gefüllt. Wird nun einer der beiden Speichersektoren vollständig gelöscht, so werden sowohl kritische als auch unkritische Daten gelöscht, was zu einem Ausfall des Systems führt.

Die abgespeicherten Daten beinhalten nämlich in der Regel sowohl kritische Daten als auch unkritische Daten. Die kritischen Daten sind dadurch gekennzeichnet, dass deren Fehlen zu einem Ausfall der gesamten Fahrerassistenzeinrichtung bzw. dazu führt, dass die Fahrerassistenzeinrichtung nicht mehr funktionstüchtig ist und das Fahrzeug in eine Werkstatt gebracht werden muss. Dies aus dem Grund, dass die kritischen Daten üblicherweise Informationen über die Betriebsparameter des Kraftfahrzeugs beinhalten, die einen Einfluss auf die Funktionsweise der Fahrerassistenzeinrichtung haben. Es kann sich hier beispielsweise um die Information handeln, ob an dem Kraftfahrzeug eine Anhängerkupplung angebracht ist oder nicht. Eine solche Anhängerkupplung verändert nämlich die Charakteristik der Empfangssignale von Ultraschallsensoren, sodass im Flash-Speicher die Information zur Verfügung gestellt werden muss, ob eine derartige Anhängerkupplung vorhanden ist oder nicht. Fehlt eine solche Information, so kann es vorkommen, dass die Fahrerassistenzeinrichtung unplausible Messwerte liefert.

Es soll also insgesamt verhindert werden, dass die kritischen Daten aus dem Flash-Speicher gelöscht werden. Eine bekannte Lösung geht dahin, kritische Daten nicht in den Speicherbereich des Flash-EEPROM abzulegen, sondern in den Bereich des Daten-Flash. Es gibt jedoch Systemkonfigurationen, bei denen eine derartige Vorgehensweise nicht möglicht ist, sodass die kritischen Daten im Daten-Flash nicht gespeichert werden können.

Eine weitere Lösung wird in der US 6 801 994 A vorgeschlagen: Hier wird eine Einheit aus einem statischen RAM (SRAM) bereitgestellt, welche mit elektrischer Energie aus einer Batterie versorgt wird. Somit wird ein nicht-flüchtiger Speicher zur Verfügung gestellt, in welchem die kritischen Daten permanent abgespeichert werden können. Diese Lösung hingegen hat den Nachteil, dass eine zusätzliche Einheit bereitgestellt werden muss, was grundsätzlich mit zusätzlichen Kosten sowie mit der Beanspruchung eines zusätzlichen Bauraums verbunden ist.

DE 199 31 184 A1 offenbart ein Verfahren und Vorrichtung zur Änderung und/oder zum Einschreiben von Daten und/oder Programmen in wenigstens einen ersten nichtflüchtigen Speicher eines Computersystems, insbesondere eines Speichers einer Steuereinheit eines Fahrzeugs. Dabei werden die Daten und/oder Programme in wenigstens erste und zweite Daten und/oder Programme aufgeteilt, wobei wenigstens die zweiten Daten und/oder Programme sicherungswürdig sind oder sicherungswürdige Daten und/oder Programme enthalten. Die alten zweiten Daten und/oder Programme in dem zugeordneten Originalbereich werden aber erst gelöscht, wenn neue zweite Daten und/oder Programme in einen nicht dem Originalbereich entsprechenden zweiten Speicherbereich eingeschrieben sind und ein Kopierprogramm in einen zweiten flüchtigen Speicher eingeschrieben ist. Das Kopierprogramm schreibt die neuen zweiten Daten und/oder Programme aus dem zweiten Speicherbereich in den Originalbereich ein. Dadurch muß keine Sicherungskopie der sicherungswürdigen Daten und/oder Programme angelegt werden. Durch einen von einem Programmiergerät ausgesendeten Löschbefehl werden die alten zweiten Daten und/oder Programme somit nicht gelöscht und diese übernehmen dann die Ablaufsteuerung.

Es ist Aufgabe der Erfindung, einen Weg aufzuzeigen, wie bei einem Verfahren der eingangs genannten Gattung - insbesondere ohne Einsatz eines zusätzlichen Speichers - verhindert werden kann, dass die kritischen Daten im Betrieb des Kraftfahrzeugs gelöscht werden.

Diese Aufgabe wird erfindungsgemäß durch ein Verfahren, durch eine Fahrerassistenzeinrichtung, wie auch durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren ist zum Verwalten von Daten in einem Flash-Speicher einer Fahrerassistenzeinrichtung eines Kraftfahrzeugs ausgelegt, nämlich insbesondere mittels einer elektronischen Recheneinrichtung - etwa eines Controllers - der Fahrerassistenzeinrichtung. Die Daten können nur sektorweise gelöscht werden. Der Flash-Speicher umfasst einen ersten und einen zweiten Speichersektor, in denen die Daten abgespeichert werden können. Vorzugsweise stehen für das Abspeichern der Daten ausschließlich zwei Speichersektoren zur Verfügung. Die Daten umfassen sowohl kritische Daten, deren Fehlen zu einem Ausfall der Fahrerassistenzeinrichtung führt, als auch unkritische Daten, also etwa solche Daten, die nicht zu einem Systemausfall führen und durch die Fahrerassistenzeinrichtung wieder erlernt werden können. Es ist vorgesehen, dass zumindest in einem der Speichersektoren stets alle kritischen Daten abgespeichert sind, sodass alle kritischen Daten stets zumindest in einem der Speichersektoren vorliegen.

Erfindungsgemäß werden, falls einer der Speichersektoren vollständig mit Daten befüllt wird und in dem anderen Speichersektor neue kritische Daten abgespeichert werden, alle in dem vollen Speichersektor abgelegten kritischen Daten in den anderen Speichersektor kopiert. Die Daten aus dem vollen Speichersektor werden erst dann gelöscht, nachdem die kritischen Daten in den anderen Speichersektor kopiert wurden.

Der erfindungsgemäße Effekt wird also dadurch erzielt, dass alle kritischen Daten (vorzugsweise mit aktuellen/gültigen Werten) in einem einzigen Speichersektor vorhanden sind. Die Erfindung beruht auf der Erkenntnis, dass es beim Kopieren von Datenblöcken von einem der Speichersektoren in den anderen Speichersektor zu einem Überlauf des Flash-Speichers (Overflow) kommen kann, nämlich beispielsweise aufgrund einer Unterspannung oder aber eines externen Resets, sodass der gesamte Flash-Speicher vollständig mit Daten gefüllt wird. Die Erfindung beruht weiterhin auf der Erkenntnis, dass die Löschung der kritischen Daten verhindert werden kann, wenn diese Daten nicht in unterschiedlichen Speichersektoren verteilt werden, sondern alle zumindest in einem der Speichersektoren abgelegt werden. Hierdurch wird erreicht, dass bei einem Überlauf des Flash-Speichers der andere Speichersektor vollständig gereinigt werden kann, ohne dass es zu einem Verlust der kritischen Daten kommt. Das Löschen der kritischen Daten wird somit verhindert, ohne dass zusätzliche Speichereinheiten eingesetzt werden müssen, wie sie im Gegenstand gemäß Dokument US 6 801 994 A verwendet werden. Die Daten müssen auch nicht in dem Daten-Flash gespeichert werden, sodass unterschiedlichste Systemkonfigurationen möglich sind. Unabhängig von der gewählten Systemkonfiguration wird das Löschen der kritischen Daten verhindert.

Die kritischen Daten liegen üblicherweise in Form eines einheitlichen Datenblocks vor. Der gesamte Datenblock wird erfindungsgemäß in einem der beiden Speichersektoren abgespeichert und liegt somit in diesem Speichersektor vor. Alle kritischen Daten liegen somit in ihrer Integrität und Aktualität in einem Speichersektor vor, sodass der andere Speichersektor gegebenenfalls gereinigt werden kann. In diesem anderen Speichersektor können auch gegebenenfalls alte kritische Datenblöcke vorliegen, die veraltet und somit nicht mehr kritisch sind. Es ist dann unschädlich, wenn diese alten Daten aus dem weiteren Speichersektor gelöscht werden. Entscheidend ist nur, dass der jeweils aktuelle, integrale Datenblock von kritischen Daten in einem der beiden Speichersektoren stets vorhanden ist und somit beim Löschen des anderen Speichersektors beibehalten werden kann. Grundsätzlich können die kritischen Daten also auch in den beiden Speichersektoren vorkommen. Entscheidend ist aber, dass die Integrität der kritischen Daten in zumindest einem der beiden Speichersektoren gewährleistet ist und somit alle kritischen Informationen in diesem Speichersektor vorhanden sind.

Die beiden Speichersektoren werden bevorzugt als so genannter Ringspeicher betrieben. Dabei werden die Daten zunächst in einem der Speichersektoren - etwa in dem ersten Sektor - abgespeichert, und der andere Speichersektor wird erst dann mit Daten gefüllt, wenn der erste Sektor voll ist. Dann kann der erste Sektor auch gelöscht werden. Die beiden Sektoren werden also abwechselnd mit Daten gefüllt und wieder gelöscht.

Es kann dabei vorkommen, dass einer der Sektoren voll ist und neue kritische Daten in den Flash-Speicher abgelegt werden. Diese neuen Daten gelangen dann in den anderen, leeren Speichersektor, so dass kritische Daten sowohl in dem ersten als auch in dem zweiten Speichersektor vorliegen. Um nun die Integrität der kritischen Daten in einem der Sektoren zu gewährleisten, ist vorgesehen, dass in einem solchen Fall alle (noch benötigten) kritischen Daten aus dem vollen Speichersektor in den anderen, leeren Speichersektor kopiert werden, so dass alle kritischen Daten in dem anderen Speichersektor vorliegen. Somit wird erreicht, dass die kritischen Daten nicht verloren gehen, wenn der volle Speichersektor wieder gelöscht wird.

Es werden die Daten aus dem vollen Speichersektor erst dann gelöscht, nachdem die kritischen Daten in den anderen Speichersektor kopiert wurden. Das Löschen von kritischen Daten wird somit verhindert.

Bevorzugt werden die Daten klassifiziert: Die Daten können in zwei Klassen unterteilt werden, nämlich in kritische sowie unkritische Daten. Dabei kann den jeweiligen Daten ein Attribut zugewiesen werden, anhand dessen erkennbar ist, ob es sich um kritische oder aber um unkritische Daten handelt. Mit dem Attribut können die Daten also gekennzeichnet werden, und zwar im Hinblick auf die genannte Klassifikation: "kritisch" oder aber "unkritisch". Die Verwaltung der kritischen Daten, insbesondere das Kopieren der kritischen Daten von einem Sektor in den anderen, kann somit aufgrund des Attributs dieser Daten erfolgen. Somit ist stets sichergestellt, dass die kritischen Daten stets in einem der Speichersektoren abgespeichert werden können, sodass ein Löschen dieser Daten verhindert wird. Dies kann beispielsweise in einer entsprechenden Software derart realisiert werden, dass, falls einer der beiden Speichersektoren voll ist und ein neuer bzw. aktualisierter Datenblock von kritischen Daten vorliegt und in dem anderen, leeren Speichersektor abgespeichert wird, alle in dem vollen Speichersektor noch vorhandenen kritischen Datenblöcke aufgrund des Attributs auch in den anderen, leeren Speichersektor kopiert werden, bevor der volle Speichersektor vollständig gelöscht wird.

Wie bereits ausgeführt, kann es bei einem Kopiervorgang der Daten von einem Speichersektor in den anderen Speichersektor zu einem Überlauf des Flash-Speichers kommen. Wird ein derartiger Speicherüberlauf erkannt, so werden die Daten bevorzugt aus dem anderen als demjenigen Speichersektor gelöscht, in welchem alle kritischen Daten abgelegt sind. Auf diesem Wege gelingt es, die abgelegten kritischen Daten auch bei einem Speicherüberlauf beizubehalten.

Als kritische Daten können beispielsweise solche Daten klassifiziert werden, die Informationen über zumindest eine Eigenschaft des Kraftfahrzeugs beinhalten, durch welche die Fahrerassistenzeinrichtung in ihrer Funktionsweise beeinflusst wird. Mit anderen Worten können in den kritischen Daten Informationen über zumindest einen Parameter des Kraftfahrzeugs enthalten sein, welcher diejenigen Eigenschaften bzw. Beschaffenheit des Kraftfahrzeugs beschreibt, die einen Einfluss auf die Funktionsweise der Fahrerassistenzeinrichtung haben. Es handelt sich dabei insbesondere um solche Daten, die im Betrieb des Kraftfahrzeugs nicht wieder gewonnen bzw. durch die Fahrerassistenzeinrichtung erlernt werden können, sondern ausschließlich von außerhalb des Kraftfahrzeugs eingegeben werden können. Als kritische Daten können beispielsweise solche klassifiziert werden, die Informationen über das Vorhandensein oder aber das Fehlen einer Anhängerkupplung und/oder Informationen über die Geometrie des Kraftfahrzeugs und/oder Informationen über die Abmessungen des Kraftfahrzeugs und/oder über die Karosserieform des Kraftfahrzeugs beinhalten. Die kritischen Daten beinhalten zum Beispiel Kodierdaten des Kraftfahrzeugs. Es können aber auch andere Daten sein, die als kritisch eingestuft werden, etwa Daten für einen Bootloader (auch unter der Bezeichnung "Startprogramm" bekannt).

Demgegenüber können als unkritische Daten solche klassifiziert werden, die im Betrieb der Fahrerassistenzeinrichtung weder gewonnen bzw. erlernt werden können. Als unkritische Daten können beispielsweise so genannte Fehlerspeichereinträge (diagnostic trouble code, DTC) klassifiziert werden, die im Betrieb der Fahrerassistenzeinrichtung wieder gewonnen werden können. Als unkritische Daten können auch andere Daten klassifiziert werden, welche Informationen über Systemparameter enthalten, welche der Fahrerassistenzeinrichtung auch gegebenenfalls von anderen Steuergeräten des Kraftfahrzeugs mitgeteilt werden können. Das Löschen der unkritischen Daten führt zwar zu einer vorübergehenden Reduktion der gesamten Systemleistung bzw. Systemperformance, jedoch können diese unkritischen Daten selbstlernend wiederhergestellt werden.

Die genannte Fahrerassistenzeinrichtung kann beispielsweise ein Parkhilfesystem sein, welches zum Unterstützen des Fahrers beim Rangieren des Kraftfahrzeugs dient, etwa beim Einparken und/oder Ausparken des Kraftfahrzeugs. Das Parkhilfesystem kann zumindest einen Ultraschallsensor aufweisen, mittels welchem Abstände zwischen dem Kraftfahrzeug einerseits und den in seiner Umgebung befindlichen Hindernissen andererseits gemessen und dem Fahrer mitgeteilt werden können. Die Erfindung ist jedoch nicht auf ein solches Fahrerassistenzsystem beschränkt und kann grundsätzlich auf unterschiedlichste Applikationen im Kraftfahrzeug angewandt werden.

Eine erfindungsgemäße Fahrerassistenzeinrichtung für ein Kraftfahrzeug weist einen Flash-Speicher auf, wie auch eine Recheneinrichtung. Der Flash-Speicher umfasst zumindest einen ersten und einen zweiten Speichersektor jeweils zum Abspeichern von Daten, und die Recheneinrichtung ist zum Verwalten der Daten in dem Flash-Speicher ausgebildet. Die Daten beinhalten kritische Daten, deren Fehlen zu einem Ausfall der Fahrerassistenzeinrichtung führt, sowie unkritische Daten. Die Recheneinrichtung ist so ausgelegt, dass zumindest in einem der Speichersektoren stets alle kritischen Daten abgelegt sind.

Ein erfindungsgemäßes Kraftfahrzeug beinhaltet eine erfindungsgemäßes Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Dabei zeigen:
- Fig. 1: in schematischer Darstellung ein Kraftfahrzeug mit einer Fahrerassistenzeinrichtung gemäß einer Ausführungsform der Erfindung;
- Fig. 2: in schematischer Darstellung einen Flash-Speicher der Fahrerassistenzeinrichtung; und
- Fig. 3: in schematischer Darstellung zwei Speichersektoren des Flash.Speichers, wobei ein Verfahren gemäß einer Ausführungsform der Erfindung näher erläutert wird.

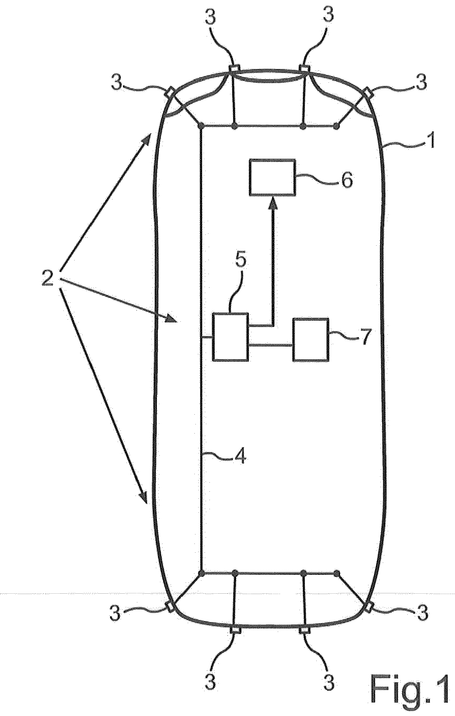

Ein in Fig. 1 dargestelltes Kraftfahrzeug 1 ist im Ausführungsbeispiel ein Personenkraftwagen. Das Kraftfahrzeug 1 beinhaltet eine Fahrerassistenzeinrichtung 2, welche im Ausführungsbeispiel lediglich beispielsweise als ein Parkhilfesystem ausgebildet ist. Die Fahrerassistenzeinrichtung 2 dient somit zum Unterstützen des Fahrers beim Einparken und Ausparken des Kraftfahrzeugs 1. Die Erfindung ist jedoch nicht auf die Ausgestaltung der Fahrerassistenzeinrichtung als ein Parkhilfesystem beschränkt; je nach Ausführungsform kann es sich bei der Fahrerassistenzeinrichtung 2 um unterschiedlichste Fahrerassistenzsysteme handeln.

Die Fahrerassistenzeinrichtung 2 weist eine Vielzahl von Ultraschallsensoren 3 auf, die sowohl an dem vorderen Stoßfänger als auch an dem hinteren Stoßfänger des Kraftfahrzeugs 1 verteilt angeordnet sind. Die Ultraschallsensoren 3 dienen zum Erfassen von Abständen zwischen dem Kraftfahrzeug 1 einerseits und Hindernissen andererseits, die sich in der Umgebung des Kraftfahrzeugs 1 befinden. Die Ultraschallsensoren 3 sind über einen Kommunikationsbus 4 oder aber über einzelne Signalleitungen mit einer Recheneinrichtung 5 der Fahrerassistenzeinrichtung 2 elektrisch gekoppelt. Über den Kommunikationsbus 4 können die Ultraschallsensoren 3 mittels der Recheneinrichtung 5 angesteuert werden; andererseits können über den Kommunikationsbus 4 auch Messdaten der Ultraschallsensoren 3 an die Recheneinrichtung 5 übertragen werden. Anhand dieser Messdaten kann die Recheneinrichtung 5 dann die Abstände zwischen dem Kraftfahrzeug 1 und den Hindernissen ermitteln. Die Recheneinrichtung 5 kann diese Abstände mittels einer Ausgabeeinrichtung 6 der Fahrerassistenzeinrichtung 2 ausgeben. Die Abstände können beispielsweise akustisch und/oder optisch mittels eines Displays ausgegeben werden.

Die Recheneinrichtung 5 ist insbesondere in Form eines digitalen Signalprozessors und/oder eines Mikrocontrollers ausgebildet. Die Recheneinrichtung 5 ist außerdem mit einem Flash-Speicher 7 (Flash-EEPROM) elektrisch gekoppelt und kann Daten in dem Flash-Speicher 7 verwalten. Insbesondere kann die Recheneinrichtung 5 neue Daten in den Flash-Speicher 7 schreiben und Daten aus dem Flash-Speicher 7 löschen.

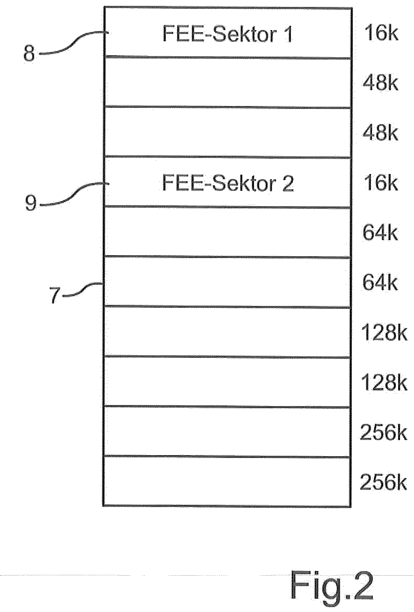

In Fig. 2 ist in schematischer Darstellung der Flash-Speicher 7 näher dargestellt. Wie aus Fig. 2 hervorgeht, beinhaltet der Flash-Speicher 7 eine Vielzahl von Speichersektoren mit unterschiedlichen Größen, wobei die jeweilige Sektorgröße neben den Speichersektoren angegeben ist. Die Partitionierung des Flash-Speichers 7 hängt von der ausgewählten Recheneinrichtung 5 (Controller) ab. Weil im Ausführungsbeispiel die eingesetzte Recheneinrichtung 5 über kein internes Daten-Flash verfügt, müssen sowohl die momentan gewonnenen Daten als auch das gesamte Computerprogramm bzw. der Programmcode in ein und demselben Flash-Speicher 7 abgelegt werden. Dabei werden zwei Speichersektoren 8, 9 - insbesondere ausschließlich zwei Sektoren - für die dynamische Abspeicherung der Daten zur Verfügung gestellt, während in den anderen Sektoren der Programmcode bzw. auch der Bootloader und dergleichen abgelegt werden.

Also beinhaltet der Flash-Speicher 7 im Ausführungsbeispiel insgesamt zwei Sektoren, in denen die Daten dynamisch gespeichert werden können, nämlich einen ersten Speichersektor 8, wie auch einen zweiten Speichersektor 9. Eine Eigenschaft des Flash-Speichers 7 besteht darin, dass die Daten nur sektorweise gelöscht werden können und eine Löschung von nur einem Anteil der Daten aus einem der Speichersektoren 8, 9 nicht möglich ist. Es können also die Speichersektoren 8, 9 jeweils nur vollständig gelöscht werden.

Der Flash-Speicher 7 wird als so genannter Ring-Speicher betrieben. Dies bedeutet, dass zunächst der erste Speichersektor 8 vollständig mit Daten befüllt wird und die Daten erst dann in dem zweiten Speichersektor 9 abgelegt werden, wenn der erste Sektor 8 voll ist. Diese Vorgehensweise wird stets wiederholt, so dass die Speichersektoren 8, 9 abwechselnd mit Daten gefüllt und wieder gelöscht werden.

In den beiden Speichersektoren 8, 9 werden Daten dynamisch abgelegt, welche beispielsweise momentan gewonnene Informationen - etwa Fehlercodes und dergleichen - beinhalten. Diese Daten beinhalten sowohl kritische Daten als auch unkritische Daten. Die unkritischen Daten beinhalten solche Informationen, die im Betrieb der Fahrerassistenzeinrichtung 2 wieder erlernt oder aber von anderen Steuergeräten des Kraftfahrzeugs 1 mitgeteilt werden können. Hier kann es sich beispielsweise um Fehlerspeichereinträge (DTC) handeln, die einen fehlerhaften Zustand einer Komponente der Fahrerassistenzeinrichtung beschreiben, etwa einer der Ultraschallsensoren 3. Demgegenüber beinhalten die kritischen Daten beispielsweise Codierdaten des Kraftfahrzeugs 1 bzw. solche Informationen, die im Betrieb des Kraftfahrzeugs 1 nicht mehr gewonnen werden können, sondern lediglich von außen eingegeben werden können. Es handelt sich hier insbesondere um die Eigenschaften des Kraftfahrzeugs 1, durch welche die Funktionsweise der Fahrerassistenzeinrichtung 2 beeinflusst wird. Es kann sich bei den kritischen Daten aber auch um Daten für den Bootloader oder aber um andere Daten handeln.

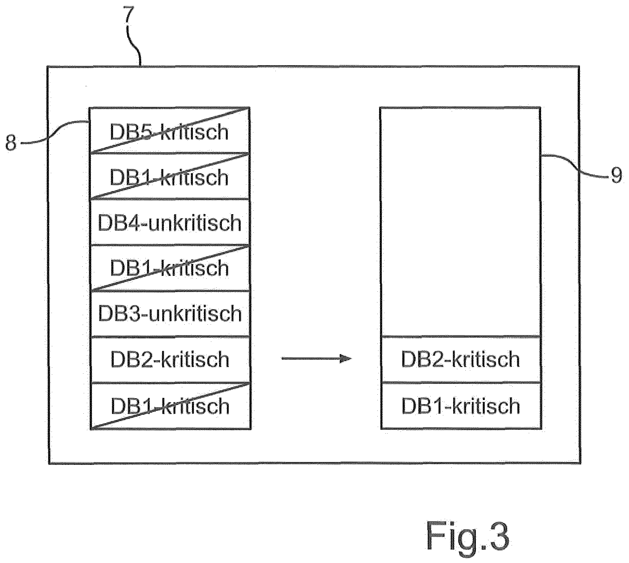

Wie bereits ausgeführt, werden die Daten in den Sektoren 8, 9 dynamisch abgelegt, so dass zunächst der erste Speichersektor 8 vollständig gefüllt wird und anschließend die Daten auch in dem zweiten Speichersektor 9 abgelegt werden können, während der erste Speichersektor 8 gelöscht werden kann und so weiter. Nun kann es vorkommen, dass gleichzeitig einerseits der erste Speichersektor 8 (bzw. der andere Sektor) voll mit Daten belegt ist und andererseits auch ein neuer kritischer Datenblock in dem Flash-Speicher 7 abgelegt bzw. ein bereits vorhandener kritischer Datenblock aktualisiert wird. Dabei kann der neue Datenblock von kritischen Daten beispielsweise deshalb abgelegt werden, weil an dem Kraftfahrzeug 1 eine Anhängerkupplung angebracht wurde und neue Kodierdaten des Kraftfahrzeugs 1 in den Flash-Speicher 7 abgelegt werden müssen. Eine solche Situation ist in Fig. 3 schematisch dargestellt. Der erste Speichersektor 8 ist vollständig mit Daten belegt, und es wird ein neuer Datenblock von kritischen Daten DB1 in den zweiten Speichersektor 9 abgespeichert. Nun sind die kritischen Daten sowohl in dem ersten als auch in dem zweiten Speichersektor 8, 9 vorhanden, so dass ein Überlauf (Overflow) des Flash-Speichers 7 zu einem Verlust der kritischen Daten führen könnte.

Um dies zu vermeiden, wird sichergestellt, dass alle (noch aktuellen bzw. benötigten) kritischen Daten aus dem ersten Sektor 8 in den zweiten Speichersektor 9 kopiert werden, bevor der erste Speichersektor 8 wieder gelöscht wird. Wie aus Fig. 3 hervorgeht, wird in den zweiten Speichersektor 9 auch noch der Datenblock von kritischen Daten DB2 kopiert, so dass in dem zweiten Speichersektor 9 beide kritischen Datenblöcke DB1 und DB2 vorliegen. Gegebenenfalls können auch weitere kritische Datenblöcke in den zweiten Speichersektor 9 kopiert werden, wenn sie noch benötigt und somit als kritisch eingestuft werden. Werden sie nicht mehr benötigt, so können sie gelöscht werden, weil es sich nicht mehr um kritische Daten handelt (wie in Fig. 3 schematisch dargestellt ist). Kommt nun zu einem Überlauf des Flash-Speichers 7, so kann der erste Speichersektor 8 gelöscht werden, ohne dass die kritischen Daten verloren gehen.

Um dies zu gewährleisten, werden die Daten klassifiziert bzw. in zwei Klassen unterteilt: in "kritische" Daten einerseits sowie in "unkritische" Daten andererseits. Bei der Klassifikation werden den Daten jeweilige Attribute zugewiesen; die kritischen Daten erhalten ein Attribut "kritisch", während die unkritischen Daten das Attribut "unkritisch" erhalten. Aufgrund des Attributs "kritisch" sorgt die Recheneinrichtung 5 dafür, dass alle kritischen Daten stets in einem der Speichersektoren 8, 9 vorliegen, sodass beim Löschen des anderen Speichersektors 8, 9 die kritischen Daten beibehalten werden.

Bei einem Überlauf des Flash-Speichers 7 wird also der andere als derjenige Speichersektor 8, 9 gelöscht, in welchem die kritischen Daten gespeichert sind. Es wird nämlich derjenige Speichersektor 8, 9 gelöscht, in welchem keine oder nicht alle kritischen Daten vorliegen. Dadurch kann ein Zustand wiederhergestellt werden, in dem das gesamte System - also die Fahrerassistenzeinrichtung 2 - weiter funktionsfähig ist, gegebenenfalls mit einer temporär eingeschränkten Performance. Die unkritischen Daten beinhalten nämlich solche Informationen, die im Betrieb der Fahrerassistenzeinrichtung 2 wiedererlernt oder aber von anderen Steuergeräten des Kraftfahrzeugs 1 mitgeteilt werden können.

## Patentansprüche

1. Verfahren zum Verwalten von Daten in einem Flash-Speicher (7) einer Fahrerassistenzeinrichtung (2) eines Kraftfahrzeugs (1), wobei Daten nur sektorweise gelöscht werden können, und bei welchem der Flash-Speicher (7) einen ersten und einen zweiten Speichersektor (8, 9) umfasst, in denen die Daten abgespeichert werden, und die Daten kritische Daten, deren Fehlen zu einem Ausfall der Fahrerassistenzeinrichtung (2) führt, sowie unkritische Daten umfassen, wobei zumindest in einem der Speichersektoren (8, 9) alle kritischen Daten abgespeichert werden, **dadurch gekennzeichnet, dass** falls einer der Speichersektoren (8, 9) vollständig mit Daten befüllt wird und in dem anderen Speichersektor (8, 9) neue kritische Daten abgespeichert werden, alle in dem vollen Speichersektor (8, 9) abgelegten kritischen Daten in den anderen Speichersektor (8, 9) kopiert werden, und die Daten aus dem vollen Speichersektor (8, 9) erst dann gelöscht werden, nachdem die kritischen Daten in den anderen Speichersektor (8, 9) kopiert wurden.

2. Verfahren nach Anspruch 1,
**dadurch gekennzeichnet, dass**
den kritischen Daten ein Attribut zugewiesen wird, mittels welchem die kritischen Daten als solche gekennzeichnet werden, und das Verwalten, insbesondere das Kopieren, der kritischen Daten aufgrund des Attributs erfolgt.

3. Verfahren nach einem der vorhergehenden Ansprüche,
**gekennzeichnet durch**
- Erkennen eines Speicherüberlaufs des Flash-Speichers (7) und
- nach Erkennen des Speicherüberlaufs Löschen der Daten ausschließlich aus dem anderen als demjenigen Speichersektor (8, 9), in welchem alle kritischen Daten abgelegt sind.

4. Verfahren nach einem der vorhergehenden Ansprüche,
**dadurch gekennzeichnet, dass**
als kritische Daten solche Daten klassifiziert werden, welche Informationen über zumindest eine Eigenschaft des Kraftfahrzeugs (1) beinhalten, durch welche die Fahrerassistenzeinrichtung (2) in ihrer Funktionsweise beeinflusst wird.

5. Fahrerassistenzeinrichtung (2) für ein Kraftfahrzeug (1), mit einem Flash-Speicher (7), wobei Daten nur sektorweise gelöscht werden können, und welcher einen ersten und einen zweiten Speichersektor (8, 9) jeweils zum Abspeichern von Daten umfasst, und mit einer Recheneinrichtung (5) zum Verwalten der Daten in dem Flash-Speicher (7), wobei die Daten kritische Daten, deren Fehlen zu einem Ausfall der Fahrerassistenzeinrichtung (2) führt, sowie unkritische Daten umfassen, wobei die Recheneinrichtung (5) dazu ausgelegt ist, zumindest in einem der Speichersektoren (8, 9) alle kritischen Daten abzuspeichern, **dadurch gekennzeichnet, dass** die Recheneinrichtung (5) dazu ausgelegt ist, falls einer der Speichersektoren (8, 9) vollständig mit Daten befüllt ist, neue kritische Daten in dem anderen Speichersektor (8, 9) abzuspeichern und alle in dem vollen Speichersektor (8, 9) abgelegten kritischen Daten in den anderen Speichersektor (8, 9) zu kopieren, und die Recheneinrichtung (5) dazu ausgelegt ist, alle Daten aus dem vollen Speichersektor (8, 9) erst nach dem Kopiervorgang der kritischen Daten zu löschen.

6. Fahrerassistenzeinrichtung (2) nach Anspruch 5,
**dadurch gekennzeichnet, dass**
die Fahrerassistenzeinrichtung (2) ein Parkhilfesystem mit zumindest einem Ultraschallsensor (3) ist.

7. Fahrerassistenzeinrichtung (2) nach einem der Ansprüche 5 oder 6,
**dadurch gekennzeichnet, dass**
die Recheneinrichtung (5) dazu ausgelegt ist, nach Erkennen eines Speicherüberlaufs des Flash-Speichers (7) die Daten ausschließlich aus dem anderen als demjenigen Speichersektor (8, 9) zu löschen, in welchem alle kritischen Daten abgelegt sind.

8. Kraftfahrzeug (1) mit einer Fahrerassistenzeinrichtung (2) nach einem der Ansprüche 5 bis 7.

## Claims

1. Method for managing data in a flash memory (7) of a driver assistance device (2) of a motor vehicle (1), wherein data can be erased only in sectors, and in which the flash memory (7) comprises a first memory sector (8) and a second memory sector (9) which store the data, and the data comprise critical data, the absence of which results in failure of the driver assistance device (2), and non-critical data, wherein all critical data are stored at least in one of the memory sectors (8, 9), **characterized in that**, if one of the memory sectors (8, 9) is completely filled with data and new critical data are stored in the other memory sector (8, 9), all critical data stored in the full memory sector (8, 9) are copied to the other memory sector (8, 9), and the data are erased from the full memory sector (8, 9) only after the critical data have been copied to the other memory sector (8, 9).

2. Method according to Claim 1,
**characterized in that**
the critical data are allocated an attribute which is used to identify the critical data as such, and the critical data are managed, in particular copied, on the basis of the attribute.

3. Method according to one of the preceding claims, **characterized by**
- detecting a memory overflow of the flash memory (7), and
- after the memory overflow has been detected, erasing the data solely from the memory sector other than that memory sector (8, 9) which stores all critical data.

4. Method according to one of the preceding claims,
**characterized in that**
those data which contain information relating to at least one property of the motor vehicle (1) which influences the method of operation of the driver assistance device (2) are classified as critical data.

5. Driver assistance device (2) for a motor vehicle (1), having a flash memory (7), wherein data can be erased only in sectors, and which comprises a first memory sector (8) and a second memory sector (9) each for storing data, and having a computing device (5) for managing the data in the flash memory (7), wherein the data comprise critical data, the absence of which results in failure of the driver assistance device (2), and non-critical data, wherein the computing device (5) is designed to store all critical data at least in one of the memory sectors (8, 9), **characterized in that** the computing device (5) is designed, if one of the memory sectors (8, 9) is completely filled with data, to store new critical data in the other memory sector (8, 9) and to copy all critical data stored in the full memory sector (8, 9) to the other memory sector (8, 9), and the computing device (5) is designed to erase all data from the full memory sector (8, 9) only after the operation of copying the critical data.

6. Driver assistance device (2) according to Claim 5,
**characterized in that**
the driver assistance device (2) is a parking assistance system having at least one ultrasonic sensor (3).

7. Driver assistance device (2) according to either of Claims 5 and 6,
**characterized in that**
the computing device (5) is designed, after a memory overflow of the flash memory (7) has been detected, to erase the data solely from the memory sector other than that memory sector (8, 9) which stores all critical data.

8. Motor vehicle (1) having a driver assistance device (2) according to one of Claims 5 to 7.

## Revendications

1. Procédé de gestion de données dans une mémoire flash (7) d'un dispositif d'assistance au conducteur (2) d'un véhicule automobile (1), dans lequel les données ne peuvent être supprimées que secteur par secteur, et dans lequel la mémoire flash (7) comprend des premier et second secteurs de mémoire (8, 9) dans lesquels les données sont stockées et les données comprennent des données critiques dont l'absence entraîne une défaillance du dispositif d'assistance au conducteur (2), et des données non critiques, dans lequel toutes les données critiques sont stockées dans au moins l'un des secteurs de mémoire (8, 9), **caractérisé en ce que** si l'un des secteurs de mémoire (8, 9) est entièrement rempli de données et si de nouvelles données critiques sont stockées dans l'autre secteur de mémoire (8, 9), toutes les données critiques stockées dans le secteur de mémoire (8, 9) plein sont copiées dans l'autre secteur de mémoire (8, 9), et les données ne sont supprimées du secteur de mémoire (8, 9) plein qu'après que les données critiques ont été copiées dans l'autre secteur de mémoire (8, 9).

2. Procédé selon la revendication 1,
**caractérisé en ce qu'**un attribut est affecté aux données critiques, au moyen duquel les données critiques sont identifiées comme telles, et **en ce que** la gestion, en particulier la copie, des données critiques s'effectue sur la base de l'attribut.

3. Procédé selon l'une des revendications précédentes,
**caractérisé par**
- la détection d'un débordement de mémoire de la mémoire flash (7) et,
- après que le débordement de mémoire a été détecté, la suppression des données exclusivement du secteur de mémoire (8, 9) autre que celui dans lequel toutes les données critiques sont stockées.

4. Procédé selon l'une des revendications précédentes,
**caractérisé en ce que** les données classées comme étant des données critiques sont celles qui contiennent des informations concernant au moins une propriété du véhicule automobile (1) influençant le mode de fonctionnement du dispositif d'assistance au conducteur (2) .

5. Dispositif d'assistance au conducteur (2) pour un véhicule automobile (1), comportant une mémoire flash (7), dans lequel les données ne peuvent être supprimées que secteur par secteur et qui comprend des premier et second secteurs de mémoire (8, 9) respectivement destinés à stocker des données, et comportant un dispositif informatique (5) destiné à gérer les données dans la mémoire flash (7), dans lequel les données comprennent des données critiques dont l'absence entraîne une défaillance du dispositif d'assistance au conducteur (2), et des données non critiques, dans lequel le dispositif informatique (5) est conçu pour stocker toutes les données critiques dans au moins l'un des secteurs de mémoire (8, 9), **caractérisé en ce que** le dispositif informatique (5) est conçu, si l'un des secteurs de mémoire (8, 9) est entièrement rempli de données, pour stocker de nouvelles données critiques dans l'autre secteur de mémoire (8, 9) et pour copier toutes les données critiques stockées dans le secteur de mémoire (8, 9) plein dans l'autre secteur de mémoire (8, 9), et le dispositif informatique (5) est conçu pour ne supprimer toutes les données du secteur de mémoire (8, 9) plein qu'après l'opération de copie des données critiques.

6. Dispositif d'assistance au conducteur (2) selon la revendication 5,
**caractérisé en ce que** le dispositif d'assistance au conducteur (2) est un système d'assistance au stationnement comportant au moins un capteur à ultrasons (3).

7. Dispositif d'assistance au conducteur (2) selon l'une des revendications 5 ou 6,
**caractérisé en ce que** le dispositif informatique (5) est conçu, après qu'un débordement de mémoire de la mémoire flash (7) a été détecté, pour supprimer exclusivement les données du secteur de mémoire (8, 9) autre que celui dans lequel toutes les données critiques sont stockées.

8. Véhicule automobile (1) comportant un dispositif d'assistance au conducteur (2) selon l'une des revendications 5 à 7.
